Europäisches Patentamt

European Patent Office

Office européen des brevets

(11) Veröffentlichungsnummer : **0 353 550 B1**

# EUROPÄISCHE PATENTSCHRIFT

(45) Veröffentlichungstag der Patentschrift :
**06.05.92 Patentblatt 92/19**

(51) Int. Cl.$^5$ : **F16F 9/02**

(21) Anmeldenummer : **89113296.1**

(22) Anmeldetag : **20.07.89**

(54) **Längeneinstellbare Verstelleinrichtung.**

(30) Priorität : **23.07.88 DE 3825077**

(43) Veröffentlichungstag der Anmeldung :
**07.02.90 Patentblatt 90/06**

(45) Bekanntmachung des Hinweises auf die
Patenterteilung :
**06.05.92 Patentblatt 92/19**

(84) Benannte Vertragsstaaten :
**AT BE CH DE ES FR GB IT LI NL SE**

(56) Entgegenhaltungen :
**DE-A- 2 942 455**
**DE-A- 3 301 267**
**DE-A- 3 507 520**
**DE-C- 712 339**
**DE-U- 8 601 132**
**DE-U- 8 630 918**
**GB-A- 2 101 268**

(73) Patentinhaber : **SUSPA COMPART**
**Aktiengesellschaft**
**Industriestrasse 12-14**
**W-8503 Altdorf (DE)**

(72) Erfinder : **Bauer, Hans Jürgen**
**Am Eichenhain 8**
**W-8503 Altdorf (DE)**
Erfinder : **Bauer, Hans-Peter**
**Ziegelhütte 9**
**W-8503 Altdorf (DE)**

(74) Vertreter : **Rau, Manfred, Dr. Dipl.-Ing. et al**
**Rau & Schneck, Patentanwälte Königstrasse 2**
**W-8500 Nürnberg 1 (DE)**

**Beschreibung**

Die Erfindung betrifft eine längeneinstellbare Verstelleinrichtung nach dem Oberbegriff des Anspruches 1.

Derartige Verstelleinrichtungen sind in zahlreichen Ausführungen, beispielsweise aus dem DE-U 74 34 098, dem DE-U 74 34 102, dem DE-U 74 34 101 und dem DE-U 86 01 132 (entsprechend EP-A 0 234 184), bekannt. Sie weisen zumindest eine Teil-Druckgasfüllung auf, mittels derer die Kolbenstange beim Öffnen des Ventils hinausgeschoben oder gegen deren Druckkraft die Kolbenstange hineingeschoben werden kann. Wenn der Kolben selber in einem Flüssigkeitsraum verschiebbar ist, dann ist eine vollständige, d.h. praktisch starre Blockierung dieser auch als Gasfeder zu bezeichnenden Verstelleinrichtung möglich. Wenn dagegen das gesamte Gehäuse mit Druckgas gefüllt ist, dann ist auch bei geschlossenem Ventil noch eine Federungsmöglichkeit mit einer sehr steilen Weg-Kraft- Kennlinie möglich. Die bekannten Verstelleinrichtungen weisen den Nachteil auf, daß Fertigung und Montage von Kolben, Kolbenstange und Ventil sehr aufwendig sind und daß die Führungs- und Abdichtungsverhältnisse verbesserungsbedürftig sind.

Der Erfindung liegt daher die Aufgabe zugrunde, eine blockierbare Verstelleinrichtung der gattungsgemäßen Art so weiterzubilden, daß eine einfache Fertigung und Montage bei großer Dichtigkeit und Betriebssicherheit erreicht wird.

Diese Aufgabe wird erfindungsgemäß durch die Merkmale im Kennzeichnungsteil des Anspruches 1 gelöst. Dadurch daß das gesamte Ventil im wesentlichen in einem durch eine Bohrung in der Kolbenstange ausgebildeten Ventilgehäuse angeordnet ist, kann es in sehr einfacher Weise durch einfaches Einstecken montiert werden. Durch die nur eine Dichtung wird die Abdichtung in allen Richtungen erreicht, nämlich in zwei Richtungen gegen den Kolben, gegen das Ventil und gegen den Ventilkörper. Durch eine einzige Verspannung wird diese in vier Richtungen wirkende umfassende Abdichtung hergestellt. Dies führt zu einer hohen Betriebssicherheit, und zwar insbesondere hohen Dichtigkeit, und außerdem zu einer sehr einfachen Endmontage.

Die Weiterbildung nach Anspruch 2 ermöglicht es, die Kolbenstange mit dem gesamten Ventil mit einer großen Führungslänge spielfrei im Kolben zu halten, so daß insgesamt eine sehr genaue Führung erreicht wird, da der Kolben wiederum gegenüber der Kolbenstange kein radiales Spiel hat und insoweit auch keine Verkantungen oder Verpressungen der Dichtung des Kolbens gegenüber dem Gehäuse erfolgen können.

Durch die Verformung nach Anspruch 3 wird gleichzeitig die Dichtung zwischen Ventil und Kolben vorgespannt. Um hierbei kein axiales Spiel zwischen Kolbenstange mit Ventil einerseits und Kolben andererseits zu erreichen, ist die Dichtung nach den Ansprüchen 4 und 5 weitergebildet.

Durch die Maßnahmen nach Anspruch 6 und 7 wird andererseits sichergestellt, daß dieselbe Dichtung entweder für ein Kurzhubventil oder ein Langhubventil eingesetzt werden kann, d.h. es sind unterschiedliche Ausführungsformen des Ventils möglich, wobei lediglich der Ventilkörper verändert werden muß.

Die erfindungsgemäßen Maßnahmen ermöglichen es weiterhin, eine Drosselöffnung in einfacher Weise entsprechend Anspruch 8 in der Stirnseite, also durch stirnseitiges Einschneiden des in der Kolbenstange ausgebildeten Ventilgehäuses herzustellen, wodurch sehr genaue Drosselverhältnisse erzielbar sind. Durch die Weiterbildung nach Anspruch 9 wird zusätzlich eine sehr gute Schalldämpfung erreicht.

Weitere Einzelheiten, Vorteile und Merkmale der Erfindung ergeben sich aus der nachfolgenden Beschreibung eines Ausführungsbeispiels anhand der Zeichnung. Es zeigt

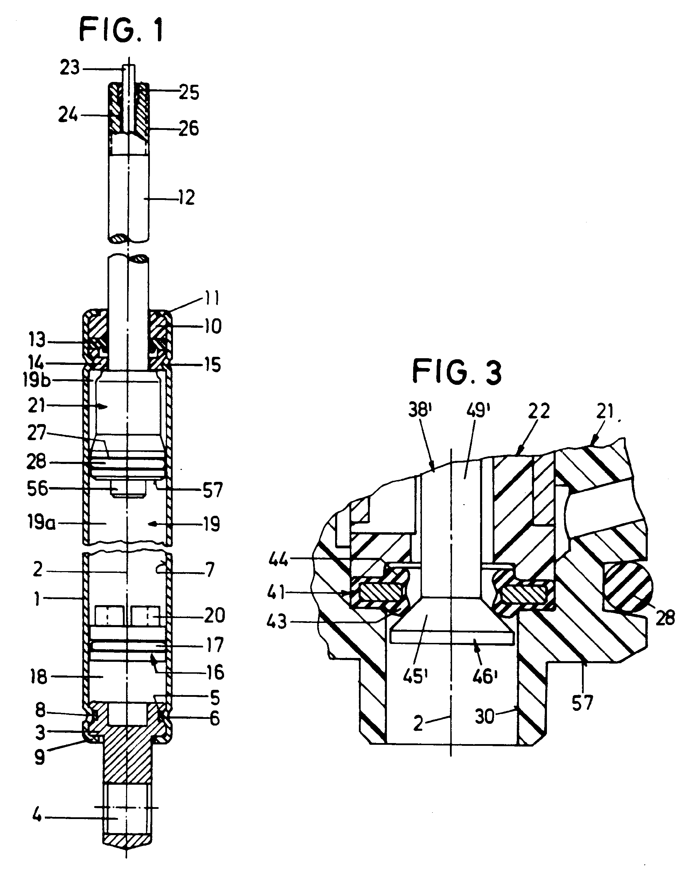

Fig. 1 eine blockierbare Verstelleinrichtung nach der Erfindung in vertikalem Längsschnitt,

Fig. 2 den Kolben mit Ventil der Verstelleinrichtung nach Fig. 1 im Längsschnitt in stark vergrößertem Maßstab und

Fig. 3 einen Teilausschnitt aus dem Kolben mit Ventil mit einem gegenüber Fig. 2 abgewandelten Ventilkörper.

Die in der Zeichnung dargestellte Verstellvorrichtung ist als starr blockierbare Gasfeder ausgebildet. Sie weist ein zylindrisches, beispielsweise aus einem Stahlrohr gebildetes Gehäuse 1 mit einer Mittel-Längs-Achse 2 auf. An einem Ende ist das Gehäuse 1 mittels eines Verschlußstopfens 3 verschlossen, an dem als Befestigungseinrichtung 4 ein sogenanntes Auge angebracht ist. Der Verschlußstopfen 3 weist in seinem Umfang eine Nut 5 auf, in der eine O-ringförmige Dichtung 6 angeordnet ist, die gegen die Innenwand 7 des Gehäuses 1 dichtend anliegt. Der Verschlußstopfen 3 ist dadurch in Richtung der Achse 2 relativ zum Gehäuse 1 festgelegt, daß dieses eine gegen die Dichtung 6 und in die Nut 5 eingedrückte Sicke 8 aufweist. Außerdem ist das zugeordnete Ende des Gehäuses 1 mit einer den Verschlußstopfen 3 außen umgreifenden Umbördelung 9 versehen.

Am anderen Ende ist das Gehäuse 1 mit einer konzentrisch zur Achse 2 angeordneten Führungsbüchse 10 versehen, die an ihrer Außenseite ebenfalls von einer Umbördelung 11 des Gehäuses 1 übergriffen wird. In der Führungsbüchse 10 ist eine konzentrisch zur Achse 2 angeordnete, aus dem Gehäuse 1 herausgeführte Kolbenstange 12 in ihrer Längsrichtung verschiebbar geführt. Gegen die Führungsbüchse 10 stützt sich eine ringförmige Dichtung 13 ab, die einerseits dichtend gegen die Innenwand 7 des Gehäuses 1 und andererseits gegen die Kolbenstange 12 anliegt. Die Dichtung 13 wiederum wird durch einen Haltering 14 axial zum Inneren

2

des Gehäuses 1 hin gehalten, der mittels einer in das Gehäuse 1 gedrückten Sicke 15 axial festgelegt wird.

Durch die geschilderten Maßnahmen ist das Gehäuse 1 an seinen beiden Enden gas- und flüssigkeitsdicht verschlossen. Im Gehäuse 1 ist ein in Richtung der Achse 2 verschiebbarer Trennkolben 16 angeordnet, der mittels einer O-ringförmigen Dichtung 17 dicht an der Innenwand 7 des Gehäuses anliegt. Zwischen dem Trennkolben 16 und dem Verschlußstopfen 3 ist ein mit Druckgas gefüllter Gasraum 18 gebildet, der gegenüber dem als Flüssigkeitsraum 19 dienenden Gehäuseraum zwischen dem Trennkolben 16 und der Dichtung 13 gas- und flüssigkeitsdicht abgedichtet ist. An dem Trennkolben 16 sind im Flüssigkeitsraum 19 Abstandshalter 20 angebracht.

An dem im Flüssigkeitsraum 19 liegenden inneren Ende der Kolbenstange 12 ist ein Kolben 21 mit einem integrierten Ventil 22 angebracht. Die Betätigung des Ventils 22 von außen erfolgt mittels eines in Form einer dünnen Stange ausgebildeten Auslösestiftes 23, der in einer konzentrisch zur Achse 2 verlaufenden Bohrung 24 in der Kolbenstange 12 angeordnet ist. Am äußeren Ende der Kolbenstange 12 ist eine Dichtung 25 angeordnet, die den Eintritt von Schmutz in die Bohrung 24 und damit in den Bereich des Ventils 22 verhindert und die gleichzeitig als eine Art Reibungsbremse dient, mittels derer ein unbeabsichtigtes Herausfallen des Auslösestiftes 23 aus der Bohrung 24 verhindert wird. An diesem äußeren Ende ist die Kolbenstange 12 weiterhin mit einem Außengewinde 26 versehen, an dem eine nicht dargestellte Befestigungseinrichtung angebracht werden kann.

Der Kolben 21 ist auf seiner Außenseite mit einer Nut 27 versehen, in der eine O-ringförmige Dichtung 28 angeordnet ist, die dichtend gegen die Innenwand 7 des Gehäuses 1 anliegt. Sie teilt den Flüssigkeitsraum 19 in zwei Teil-Flüssigkeitsräume 19a und 19b, von denen der Teil-Flüssigkeitsraum 19a sich zwischen der Dichtung 28 und dem Trennkolben 16 und der Teil-Flüssigkeitsraum 19b sich zwischen der Dichtung 28 und der Dichtung 13 erstreckt.

Der Kolben 21 ist hülsenförmig ausgebildet. Er weist eine zur Achse 2 zylindrische Aufnahme 29 für die Kolbenstange 12 auf. In dieser Aufnahme 29 ist die Kolbenstange 12 radial spielfrei gehalten. Die Aufnahme 29 weist eine kanalartige Öffnung 30 auf, die in den Teil-Flüssigkeitsraum 19a mündet und als zur Achse 2 konzentrische Bohrung ausgebildet ist. Zwischen der Aufnahme 29 und der Öffnung 30 ist ein Ringboden 31 der Aufnahme 29 ausgebildet.

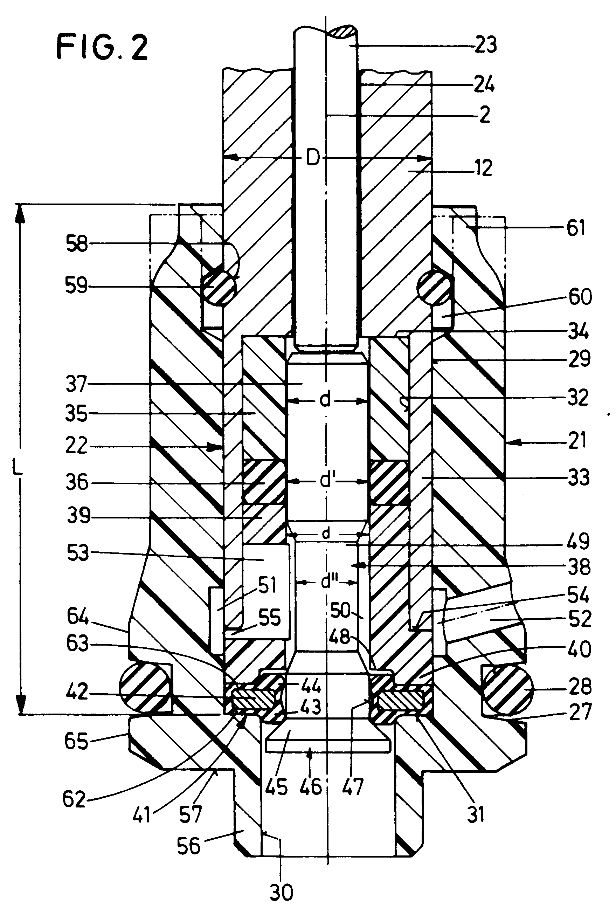

Die Kolbenstange 12 ist an ihrem im Kolben 21 befindlichen Ende mit einer zur Achse 2 koaxialen zylindrischen Bohrung 32 versehen; die in diesem Bereich verbliebene Wand bildet ein Ventilgehäuse 33 mit einem radial zur Achse 2 verlaufenden ringförmigen Boden 34. In dieses Ventilgehäuse 33 ist eine ringzylindrische Führungsbüchse 35 eingesetzt, die gegen den Boden 34 anliegt. Auf der dem Boden 34 abgewandten Seite liegt gegen die Führungsbüchse 35 eine O-ringförmige Dichtung 36 an, die einerseits gegen das Ventilgehäuse 33 und andererseits gegen einen zylindrischen Führungsabschnitt 37 eines Ventilkörpers 38 dichtend anliegt. Gegen die Dichtung 36 liegt wiederum eine Halte- und Führungsbüchse 39 an, die mit einem nach außen vorstehenden Ringbund 40 das Ventilgehäuse 33 übergreift, also axial gegen die Kolbenstange 12 festgelegt ist. Der Innendurchmesser d der Führungsbüchse 35 und der Halte- und Führungsbüchse 39 ist identisch und nur um das notwendige Führungsspiel größer als der Außendurchmesser d' des zylindrischen Führungsabschnitts 37 des Ventilkörpers 38, der in der Führungsbüchse 35 und der Halte- und Führungsbüchse 39 geführt ist, wie Fig. 2 erkennen läßt.

Zwischen dem Ringbund 40 und dem Ringboden 31 ist eine Dichtung 41 angeordnet. Diese weist einen inneren zur Stabilisierung dienenden Ring 42 aus einem festen Werkstoff, wie einem Metall oder einem ausreichend harten Kunststoff auf. Die Dichtung 41 liegt einer seits gegen die Aufnahme 29, andererseits gegen den Ringboden 31 und gegen den diesem gegenüberliegenden Ringbund 40 dichtend an. An ihrer radial innenliegenden Seite ist die Dichtung 41 mit axial und radial vorstehenden Dichtungswulsten 43,44 versehen. Der Dichtungswulst 43 liegt gegen eine sich kegelstumpfförmig erweiternde Dichtungsfläche 45 eines in der Öffnung 30 befindlichen Ventiltellers 46 des Ventilkörpers 38 an. Außerdem liegt dieser Dichtungswulst 43 gegen einen sich an die kegelstumpfförmige Dichtungsfläche 45 anschließende zylindrische Dichtfläche 47 des Ventilkörpers 38 an. Der andere zum Inneren des Ventils 22 hin befindliche Dichtungswulst 44 liegt bei der Ausgestaltung nach Fig. 2 nur an dieser zylindrischen Dichtfläche 47 an. Der Dichtungswulst 43 steht über den Ringboden 31 radial nach innen in die kanalartige Öffnung 30 vor, während der andere Dichtungswulst 44 axial ungeführt frei in eine Hinterschneidung 48 des Ringbundes 40 hineinragt; die Dichtungswulste 43,44 sind also axial unverpreßt.

An die zylindrische Dichtfläche 47 schließt sich ein gegenüber dieser und gegenüber dem Führungsabschnitt verjüngter Abschnitt 49 an, dessen Außendurchmesser d″ deutlich kleiner ist als der Innendurchmesser d der Halte- und Führungsbüchse 39, so daß zwischen diesen ein Überströmraum 50 gebildet wird.

In der Aufnahme 29 ist im Bereich des Übergangs zwischen dem Ventilgehäuse 33, also der Kolbenstange 12 und des Ringbundes 40 ein Ringkanal 51 ausgebildet, der also nach innen jeweils teilweise durch das Ventilgehäuse 33 und den Ringbund 40 abgedeckt wird. Dieser Ringkanal 51 ist durch eine Überströmöffnung 52 mit dem Teil-Flüssigkeitsraum 19b verbunden.

Radial gegenüber der Überströmöffnung 52 ist in der Halte- und Führungsbüchse 39 ein sich parallel zur Achse 2 erstreckender schlitzartiger Durchbruch 53 ausgebildet. Diesem zugeordnet ist in der Stirnseite 54 des Ventilgehäuses 33 eine Drosselöffnung 55 ausgebildet, die also zum Ringkanal 51 hin offen ist. Aus dem Teil-Flüssigkeitsraum 19b kann also Flüssigkeit durch die durch eine Bohrung gebildete kanalartige Überströmöffnung 52 in den Ringkanal 51 und dann auf der diametral gegenüberliegenden Seite durch die Drosselöffnung 55 und den Durchbruch 53 in den Überströmraum 50 fließen. Die Strömung kann naturgemäß auch in umgekehrter Richtung erfolgen.

Wenn durch Hineindrücken des Auslösestiftes 23 in die Kolbenstange 12 hinein der Ventilkörper in Richtung zum Teil-Flüssigkeitsraum 19a verschoben wird, dann kommt der verjüngte Abschnitt 49 vor die Dichtung 41, deren Dichtungswulste 43,44 aufgrund des relativ kleinen Durchmessers d″ nicht dichtend an dem verjüngten Abschnitt 49 anliegen. In diesem Fall kann dann die Flüssigkeit aus dem Überströmraum 50 innen an der Dichtung 41 vorbei in die Öffnung 30 und von dort in den Teil-Flüssigkeitsraum 19a bzw. in umgekehrter Richtung fließen.

Der Ventilteller 46 bleibt bei diesen Verstellbewegungen in der kanalartigen Öffnung 30, die wie ein Schutzrohr 56 über die Stirnseite 57 des Kolbens 21 vorsteht. Wenn in einem Grenzfall, bei völlig eingeschobener Kolbenstange 12, der Kolben 21 an den Trennkolben 16 stößt, dann kommen die Abstandshalter 20 zur Anlage an die Stirnseite 57, so daß auch dann Flüssigkeit ungehindert in die Öffnung 30 bzw. aus der Öffnung 30 strömen kann. Durch die diametrale Anordnung von Überströmöffnung 52 und Drosselöffnung 55 wird eine gute Schalldämmung erreicht. Die Ausbildung der Drosselöffnung 55 in der Stirnseite 54 des aus der Kolbenstange 12 herausgearbeiteten Ventilgehäuses 33 läßt in sehr einfacher Weise eine exakte Dimensionierung des Querschnitts der Drosselöffnung 55 zu, der auf jeden Fall erheblich kleiner ist als die Querschnitte des Durchbruchs 53, der Überströmöffnung 52 und des Ringkanals 51, so daß die Drosselung so gut wie ausschließlich nur in dieser Drosselöffnung 55 stattfindet.

Der Kolben 21 ist an seinem seiner Stirnseite 57 abgewandten Ende auf der Kolbenstange in dem Bereich hinter dem Ventilgehäuse 33 festgelegt. Hier weist die Kolbenstange 12 eine Ringnut 58 mit Teilkreisquerschnitt auf, in die ein Sicherungsring 59 mit Kreisquerschnitt eingelegt ist. Der Kolben 21 ist auf seiner dem Ringboden 31 entgegengesetzten offenen Seite in unverformtem Zustand mit einer koaxial zur Achse 2 verlaufenden Bohrung 60 versehen. Die Form des Kolbens 21 in diesem Bereich in unverformtem Zustand ist in Fig. 2 mit einer Strich-Doppelpunkt-Linie angedeutet. Nach dem Zusammenfügen des Ventils und des Kolbens in der oben geschilderten Weise wird der Kolben im Be reich dieser Bohrung 60 zur Kolbenstange 12 hin verformt. Er liegt dann axial gegen den Sicherungsring 59 und auch in seinem äußeren Endbereich mit einem verjüngten Abschnitt 61 gegen die Kolbenstange an. Bei dieser Verformung wird der Kolben 21 axial gegen das Ventil 22 verspannt, wobei die Dichtung 41 axial zwischen dem Ringboden 31 und dem Ringbund 40 zusammengedrückt wird. Da der Ring 42 der Dichtung 41 in sich starr ist, können hierbei nur die relativ dünnen Dichtungsflächen 62,63, die gegen den Ringboden 31 bzw. den Ringbund 40 anliegen, komprimiert werden. In unverpreßtem Zustand sind diese Dichtungsflächen 62,63 einige zehntel Millimeter, beispielsweise also 0,3 bis 0,6 mm dick. Um die Verformung zu ermöglichen besteht der Kolben 21 aus einer geeigneten Leichtmetallegierung oder einem geeigneten thermisch verformbaren Kunststoff.

Wie aus Fig. 2 erkennbar ist, ist die Gesamtlänge L der Aufnahme 29 im Vergleich zum Außendurchmesser D der Kolbenstange 12 groß. Sie ist etwa zwei- bis viermal und insbesondere etwa dreimal so groß. Dadurch tritt keine Verkantung der Kolbenstange 12 relativ zur Dichtung 28 ein, so daß eine einwandfreie Führung des Kolbens 21 mit seinen beiderseits der Dichtung 28 befindlichen Führungsflächen 64,65 an der Innenwand 7 des Gehäuses 1 gewährleistet ist. Außerdem ist auch kein Verkanten gegenüber der Dichtung 41 möglich, so daß trotz der sehr dünnen Ausbildung der Dichtungsflächen 62,63 eine einwandfreie Abdichtung gewährleistet ist.

In Fig. 3 ist ein Teilausschnitt aus dem Kolben 21 mit Ventil 22 dargestellt, das sich von der Auführungsform nach Fig. 2 nur dadurch unterscheidet, daß sich der verjüngte Abschnitt 49′ des Ventilkörpers 38′ bis zur kegelstumpfförmigen Dichtfläche 45′ des Ventiltellers 46′ erstreckt. In diesem Fall liegt die Dichtung 41 nur mit ihrem einen der Öffnung 30 zugewandten Dichtungswulst 43 an der Dichtfläche 45′ an. Der andere Dichtungswulst 44 ist gegenüber dem Ventilkörper 38′ funktionslos. Bei dieser Ausführungsform ist das Ventil 21 bereits geöffnet, wenn der Auslösestift 23 und damit der Ventilkörper 38′ nur geringfügig in Richtung der Achse 2 verschoben werden, beispielsweise um weniger als einen Millimeter, da zum Öffnen des Ventils bereits das Abheben der Dichtfläche 45′ von dem Dichtungswulst 43 ausreicht. Dagegen muß bei der Ausführungsform nach Fig. 2 zum Öffnen des Ventils der Ventilkörper 38 so weit in Richtung der Achse 2 verschoben werden, bis die zylindrische Dichtfläche 47 außer Eingriff mit beiden Dichtungswulsten 43,44 kommt. Der Öffnungshub beträgt also einige Millimeter.

Da der Flüssigkeitsraum 19 mit Flüssigkeit gefüllt ist, wird die Verstelleinrichtung bei geschlossenem Ventil 22 vollständig blockiert.

## Patentansprüche

1. Längeneinstellbare Verstelleinrichtung, mit einem an einem Ende verschlossenen, mit einem Druckmedium gefüllten zylindrischen Gehäuse (1), mit einer abgedichtet aus dem anderen Ende des Gehäuses (1) herausgeführten, in letzterem verschiebbaren Kolbenstange (12), mit einem im Gehäuse (1) angeordneten, gegenüber dessen Innenwand (7) abgedichtet geführten, fest mit der Kolbenstange (12) verbundenen, mit dieser verschiebbaren und den Innenraum des Gehäuses (1) in zwei Teil-Räume (19a,19b) aufteilenden Kolben (21), wobei der Kolben (21) eine zylindrische Aufnahme (29) zur spielfreien Anordnung der zylindrischen Kolbenstange (12) aufweist, mit einem den Kolben (21) durchsetzenden, im wesentlichen in einem durch eine Bohrung (32) in der Kolbenstange (12) gebildeten Ventilgehäuse (33) angeordneten Ventil (22) zum Verbinden oder Trennen der beiden Teil-Räume (19a, 19b), das einen den Kolben (21) durchsetzenden, mittels eines in der Kolbenstange (12) verschiebbar geführten Auslösestiftes (23) betätigbaren Ventilkörper (38,38') aufweist, der mit einer Dichtfläche (45,47,45') gegen eine Dichtung (41) anliegt und der durch Verschieben in eine die Dichtung (41) überbrückende Stellung bringbar ist, dadurch gekennzeichnet, daß die Kolbenstange mit dem Ventil (22) im Kolben (21) gegen die Dichtung (41) verspannt ist, die dichtend axial gegen einen Ringboden (31) der Aufnahme (29), axial außen gegen die Aufnahme (29), axial gegen das Ventil (22) und gegen den Ventilkörper (38,38') anliegt.

2. Verstelleinrichtung nach Anspruch 1, dadurch gekennzeichnet, daß die Kolbenstange (12) mindestens mit ihrem Ventilgehäuse (33) in dem Kolben (21) angeordnet ist.

3. Verstelleinrichtung nach Anspruch 1, dadurch gekennzeichnet, daß der Kolben (21) benachbart zum Ventilgehäuse (33) um einen an der Kolbenstange (12) angebrachten Sicherungsring (59) verformt ist.

4. Verstelleinrichtung nach Anspruch 3, dadurch gekennzeichnet, daß die Dichtung (41) einen inneren Stütz-Ring (42) aufweist.

5. Verstelleinrichtung nach Anspruch 4, dadurch gekennzeichnet, daß die Dichtung (41) dünne Dichtungsflächen (62,63) aufweist, die an dem Ventil (22) und an dem Ringboden (31) anliegen.

6. Verstelleinrichtung nach Anspruch 1, dadurch gekennzeichnet, daß die Dichtung (41) mindestens einen radial nach innen und axial frei vorstehenden Dichtungswulst (43,44) aufweist, der gegen eine Dichtungsfläche (45,47,45') des Ventilkörpers (38,38') anliegt.

7. Verstelleinrichtung nach Anspruch 6, dadurch gekennzeichnet, daß der Ventilkörper (38,38') mit einer kegelstumpfförmigen und/oder einer zylindrischen Dichtfläche (45,47,45') versehen ist, gegen die der mindestens eine Dichtungswulst (43,44) anliegt.

8. Verstelleinrichtung nach Anspruch 1, dadurch gekennzeichnet, daß das Ventilgehäuse (33) an seiner Stirnseite (54) eine Drosselöffnung (55) aufweist.

9. Verstelleinrichtung nach Anspruch 8, dadurch gekennzeichnet, daß die Drosselöffnung (55) diametral zu einer im Kolben (21) ausgebildeten, zu einem Teil-Raum (19b) führenden Überströmöffnung (52) angeordnet ist.

## Claims

1. Positioning device adjustable in length, with a cylindrical housing (1) closed at one end and filled with a pressure medium, with a piston rod (12) sealingly extending from the other end of the housing (1) and displaceable therein, with a piston (21) disposed in the housing (1) and sealingly guided against an inner wall (7) thereof, the piston (21) being fixedly connected with the piston rod (12) and being displaceable together with the piston rod (12) and dividing the inner chamber of the housing (1) into two partial chambers (19a, 19b), the piston (21) having a cylindrical receptacle (29) for disposing without play the cylindrical piston rod (12), with a valve (22) passing through the piston (21) and being substantially arranged in a valve housing (33) formed by a bore (32) in the piston rod (12), for connecting or separating the two partial chambers (19a, 19b), which valve (22) comprises a valve body (38, 38') passing through the piston (21) and being actuable by means of a trigger pin (23) displaceably guided in the piston rod (12) which valve body (38, 38') has a sealing surface (45, 47, 45') which abuts against a seal (41) and which valve body (38, 38') can be brought by displacement into a position bridging the seal (41), characterized in that the piston rod with the valve (22) is stressed against the seal (41) in the piston (21), which seal (41) sealingly abuts axially on an annular bottom (31) of the receptacle (29), radially outside on the receptacle (29), axially on the valve (22) and on the valve body (38, 38').

2. Positioning device in accordance with claim 1, characterized in that the piston rod (12) is arranged at least with its valve housing (33) in the piston (21 ).

3. Positioning device in accordance with claim 1, <u>characterized in that</u> adjacent to the valve housing (33) the piston (21) is deformed around a securing ring (59) arranged on the piston rod (12).

4. Positioning device in accordance with claim 3, <u>characterized in that</u> the seal (41) has an interior stabilization ring (42).

5. Positioning device in accordance with claim 4, <u>characterized in that</u> the seal (41) has thin sealing surfaces (62, 63), which abut on the valve (22) and on the annular bottom (31).

6. Positioning device in accordance with claim 1, <u>characterized in that</u> the seal (41) has at least one sealing bead (43, 44) protruding radially inwards and axially free and which abuts on a sealing surface (45, 47, 45') of the valve body (38, 38').

7. Positioning device in accordance with claim 6, <u>characterized in that</u> the valve body (38, 38') is provided with a truncated cone-like and/or a cylindrical sealing surface (45, 47, 45'), on which the at least one sealing bead (43, 44) abuts.

8. Positioning device in accordance with claim 1, <u>characterized in that</u> the valve housing (33) has a throttle opening (55) at its front side (54).

9. Positioning device in accordance with claim 8, <u>characterized in that</u> the throttle opening (55) is arranged diametrically to one overflow opening (52) which is provided in the piston (21) and which leads to a partial chamber (19b).

**Revendications**

1. Dispositif de positionnement à longueur réglable comportant un carter cylindrique (1) fermé à une extrémité et rempli d'un fluide de pression, une tige de piston (12) sortant de façon étanche de l'autre extrémité du carter (1) et coulissant dans ce dernier, un piston (21) disposé dans le carter (1) guidé de façon étanche dans la paroi intérieure (7) de celui-ci, assemblé solidairement avec la tige de piston (12), coulissant avec celle-ci et divisant le volume intérieur du carter (1) en deux chambres élémentaires (19a, 19b), le piston (21) comportant un logement cylindrique (29) pour recevoir sans jeu la tige de piston cylindrique (12), une soupape (22) traversant le piston (21) et essentiellement disposée dans un corps de soupape (33) formé par un alésage (32) dans la tige de piston (12), cette soupape reliant ou séparant les deux chambres élémentaires (19a, 19b) et comportant un obturateur de soupape (38, 38') actionné par une tige de déclenchement (23) guidée pour coulisser dans la tige de piston (12), cet obturateur s'appuyant par une surface d'étanchéité (45, 47, 45') contre un joint d'étanchéité (41) et pouvant être amené par déplacement dans une position de franchissement du joint d'étanchéité (41), <u>caractérisé en ce que</u> la tige de piston est, avec la soupape (22) du piston (21), bloquée contre le joint d'étanchéité (41) qui s'appuie de façon étanche en direction axiale contre un fond annulaire (31) du logement (29), en direction radiale vers l'extérieur contre le logement (29), en direction axiale contre la soupape (22) et contre l'obturateur de soupape (38, 38').

2. Dispositif de positionnement selon la revendication 1, <u>caractérisé en ce que</u> la tige de piston 12 est disposée, au moins par son corps de soupape (33), dans le piston (21).

3. Dispositif de positionnement selon la revendication 1, <u>caractérisé en ce que</u> le piston (21) est déformé au voisinage du corps de soupape (33) autour d'une bague d'arrêt (59) disposée sur la tige de piston (12).

4. Dispositif de positionnement selon la revendication 3, <u>caractérisé en ce que</u> le joint d'étanchéité (41) comporte une bague d'appui intérieure (42).

5. Dispositif de positionnement selon la revendication 4, <u>caractérisé en ce que</u> le joint d'étanchéité (41) comporte des parois minces d'étanchéité (62, 63) qui s'appuient sur la soupape (22) et sur le fond annulaire (31).

6. Dispositif de positionnement selon la revendication 1, <u>caractérisé en ce que</u> le joint d'étanchéité (41) comporte au moins un bourrelet d'étanchéité (43, 44) s'avançant en direction radiale vers l'intérieur et librement en direction axiale, ce bourrelet s'appuyant contre une surface d'étanchéité (45, 47, 45') de l'obturateur de soupape (38, 38').

7. Dispositif de positionnement selon la revendication 6, <u>caractérisé en ce que</u> l'obturateur de soupape (38, 38') est muni d'une surface d'étanchéité (45, 47, 45') tronconique et/ou cylindrique contre laquelle s'appuie le ou les bourrelets d'étanchéité (43, 44).

8. Dispositif de positionnement selon la revendication 1, <u>caractérisé en ce que</u> le corps de soupape (33) comporte un orifice d'étranglement (55) sur sa face frontale (54).

9. Dispositif de positionnement selon la revendication 8, <u>caractérisé en ce que</u> l'orifice d'étranglement (55) est disposé en opposition diamétrale à une ouverture d'écoulement (52) formée dans le piston (21) et conduisant à une chambre élémentaire (19b).

# FIG. 1

# FIG. 3

# FIG. 2